# EUROPEAN PATENT APPLICATION

(11) **EP 4 745 922 A1**
(43) Date of publication of application: **20.05.2026**
(21) Application number: 25208523.8
(22) Date of filing: 14.10.2025
(51) Int. Cl.: G07C 9/00

(54) **BLUETOOTH CAR CONTROLLER WITH POWER MANAGEMENT FUNCTION AND POWER MANAGEMENT METHOD THEREOF**

(30) Priority: 18.11.2024 TW 113144259
(71) Applicant: IVTES LTD., New Taipei City (TW)
(72) Inventor: CHEN, Chi-Ting, New Taipei City (TW)
(74) Representative: Savi, Massimiliano

(57) **Abstract**

When a Bluetooth car controller (10) is connected to an external device (20), and a battery voltage of the Bluetooth car controller (10) is between a first voltage threshold and a second voltage threshold, the Bluetooth car controller (10) outputs an automatic unlocking signal for unlocking a car door and outputs a low-power notification message to the external device (20). When the Bluetooth car controller (10) is connected to the external device (20), and the battery voltage is less than the second voltage threshold, the Bluetooth car controller (10) outputs the low-power notification message to the external device (20) and omits generating the automatic unlocking signal. The low-power notification message on the external device (20) notifies a user to change a battery of the Bluetooth car controller (10) before the battery is out of power.

## Description

### 1. Field of the Invention

The present invention relates to a Bluetooth car controller, more particularly a Bluetooth car controller with a power management function and a power management method thereof.

### 2. Description of the Related Art

A conventional Bluetooth car controller tends to draw small amounts of power supplied by its batteries, and thus, despite being powered by batteries, the conventional Bluetooth car controller tends to work for a long period of time. However, the batteries of the conventional Bluetooth car controller will eventually run out of power, and when they do, if a user of the conventional Bluetooth car controller forgets to exchange the batteries or recharge the batteries, the conventional Bluetooth car controller will cease to function. In reality, the conventional Bluetooth car controller often does cease to function, because for the long period of time the user is used to the batteries having still enough power, and so the user often does not have new batteries ready for change when the old batteries do run out of power.

Overall, when the conventional Bluetooth car controller is running low on power, the conventional Bluetooth car controller simply ceases to function properly, and causes the user great inconvenience.

To overcome the aforementioned problem, the present invention provides a Bluetooth car controller with a power management function and a power management method thereof. The present invention automatically notifies a user about a low-power situation when a battery is running low on power.

The Bluetooth car controller with the power management function of the present invention is configured to be mounted in a car. The Bluetooth car controller with the power management function includes a processor module, a Bluetooth transceiver module, a door lock controller module, and a battery module.

The Bluetooth transceiver module is connected to the processor module, and the Bluetooth transceiver module is configured to connect to an external device. The door lock controller module is connected to the processor module, and the door lock controller module is configured to output a locking signal to lock a car door of the car or to output an unlocking signal to unlock the car door of the car. The battery module is connected to the processor module, and the processor module monitors a battery voltage of the battery module.

The processor module determines whether the Bluetooth transceiver module is connected to the external device.

When the Bluetooth transceiver module is connected to the external device, the processor module determines whether the battery voltage is less than or equal to a first voltage threshold. When the Bluetooth transceiver module is connected to the external device, and the battery voltage is less than or equal to the first voltage threshold, the processor module determines whether the battery voltage is further less than or equal to a second voltage threshold. When the Bluetooth transceiver module is connected to the external device, and the battery voltage is greater than the second voltage threshold, the processor module generates an automatic unlocking signal, and the processor module sends the automatic unlocking signal to the door lock controller module, thus allowing the door lock controller module to output the unlocking signal. Moreover, the processor module also generates a low-power notification message, and the processor module sends the low-power notification message to the external device through the Bluetooth transceiver module. When the Bluetooth transceiver module is connected to the external device, and the battery voltage is less than or equal to the second voltage threshold, the processor module generates the low-power notification message and sends the low-power notification message to the external device through the Bluetooth transceiver module. However, the processor module omits generating the automatic unlocking signal.

The power management method of the present invention is executed by the processor module of the Bluetooth car controller with the power management function. The power management method includes the following steps:
monitoring a battery voltage of a battery module;
determining whether being in connection with an external device;
when in connection with the external device, determining whether the battery voltage is less than or equal to a first voltage threshold;
when in connection with the external device, and when the battery voltage is less than or equal to the first voltage threshold, determining whether the battery voltage is less than or equal to a second voltage threshold;
when in connection with the external device, and when the battery voltage is greater than the second voltage threshold, generating an automatic unlocking signal, generating a low-power notification message, and sending the low-power notification message to the external device;
when in connection with the external device, and when the battery voltage is less than or equal to the second voltage threshold, generating a low-power notification message, sending the low-power notification message to the external device, and omitting generating the automatic unlocking signal.

Overall, when the Bluetooth car controller is connected to the external device, the Bluetooth car controller is able to automatically send the low-power notification message to the external device, thus allowing a user using the external device to read the low-power notification message. As the user is notified about a low-power situation of the battery module, the user would be able to exchange or recharge the battery module with more power before the battery module runs out of power. Furthermore, the Bluetooth car controller is capable of automatically unlocking the car door; however, when the Bluetooth car controller is running low on power, the Bluetooth car controller stops automatically unlocking the car door, so as to preserve some power in the Bluetooth car controller while also reminding the user that the Bluetooth car controller is running low on power. This power management function allows the present invention to notify the user about the low-power situation of the Bluetooth car controller before the Bluetooth car controller completely runs out of power, thus preventing the Bluetooth car controller from completely running out of power and ceasing to function.

### IN THE DRAWINGS

Fig. 1 is a block diagram of a system circuit used for a Bluetooth car controller with a power management function of the present invention.
Fig. 2A and Fig. 2B are flow charts of a power management method of the present invention.
Fig. 3A is a perspective view of the Bluetooth car controller connected to an external device.
Fig. 3B is a perspective view of the Bluetooth car controller disconnected from the external device.
Fig. 4A and Fig. 4B are flow charts of a function of automatic recording battery change time for the power management method.
Fig. 5 is a flow chart of an automatic restart function of the power management method.

The present invention provides a Bluetooth car controller with a power management function and a power management method thereof.

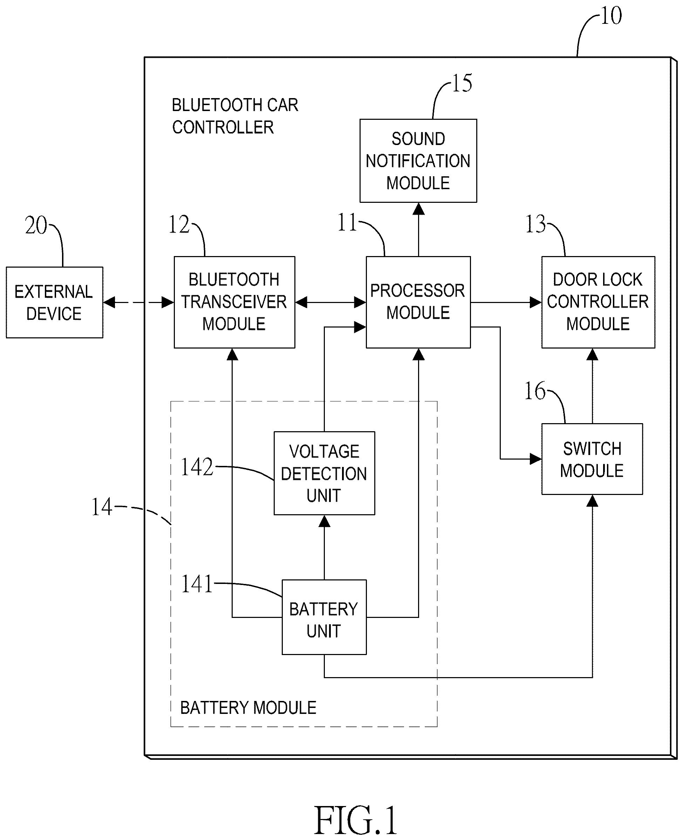

With reference to Fig. 1, in an embodiment, the Bluetooth car controller 10 with the power management function is mounted in a car. The Bluetooth car controller 10 includes a processor module 11, a Bluetooth transceiver module 12, a door lock controller module 13, and a battery module 14. The Bluetooth transceiver module 12 is connected to the processor module 11, and the Bluetooth transceiver module 12 is configured to connect to an external device 20. The door lock controller module 13 is connected to the processor module 11, and the door lock controller module 13 is configured to output a locking signal to lock a car door of the car or to output an unlocking signal to unlock the car door of the car. The battery module 14 is connected to the processor module 11, and the processor module 11 monitors a battery voltage of the battery module 14. In an embodiment of the present invention, the external device 20 is a mobile device of a user, and the mobile device may be a smart phone, a smart bracelet, or a smart watch.

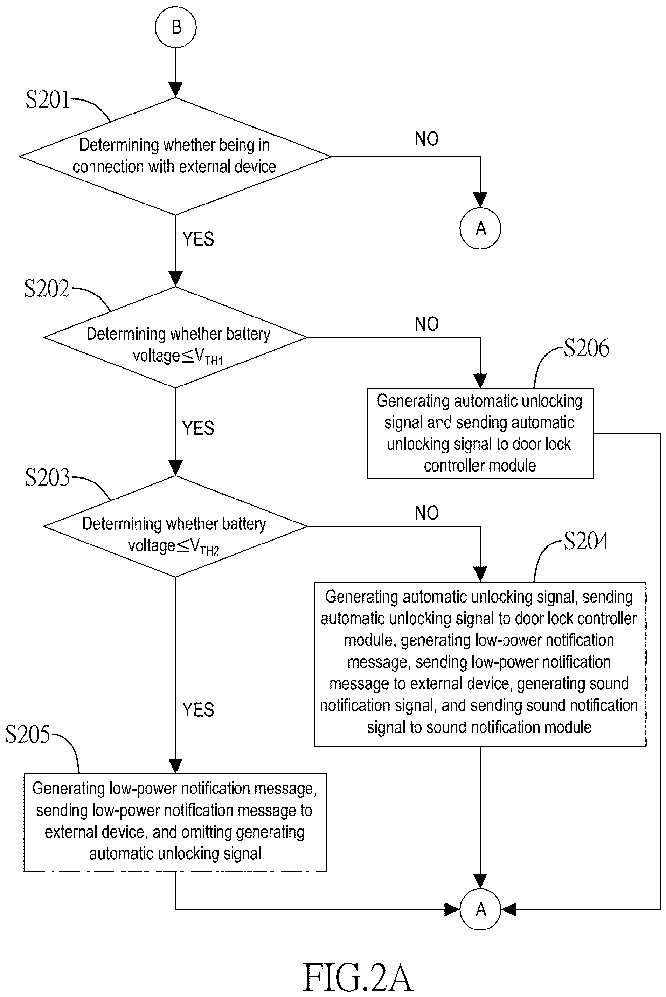

With further reference to Fig. 2A, the processor module 11 determines whether the Bluetooth transceiver module 12 is connected to the external device 20 (S201). When the Bluetooth transceiver module 12 is connected to the external device 20, the processor module 11 determines whether the battery voltage is less than or equal to a first voltage threshold V_{TH1} (S202). When the Bluetooth transceiver module 12 is connected to the external device 20, and the battery voltage is less than or equal to the first voltage threshold V_{TH1}, the processor module 11 determines whether the battery voltage is further less than or equal to a second voltage threshold V_{TH2} (S203). When the Bluetooth transceiver module 12 is connected to the external device 20, and the battery voltage is greater than the second voltage threshold V_{TH2}, the processor module 11 generates an automatic unlocking signal, sends the automatic unlocking signal to the door lock controller module 13 for allowing the door lock controller module 13 to output the unlocking signal, generates a low-power notification message, and sends the low-power notification message to the external device 20 through the Bluetooth transceiver module 12 (S204). When the Bluetooth transceiver module 12 is connected to the external device 20, and the battery voltage is less than or equal to the second voltage threshold V_{TH2}, the processor module 11 generates the low-power notification message, sends the low-power notification message to the external device 20 through the Bluetooth transceiver module 12, and omits generating the automatic unlocking signal (S205).

When the Bluetooth car controller 10 is connected to the external device 20, and the battery voltage is less than the first voltage threshold V_{TH1} or the second voltage threshold V_{TH2}, the Bluetooth car controller 10 is able to automatically send the low-power notification message to the external device 20, thus allowing the user using the external device 20 to read the low-power notification message. As the user is notified about a low-power situation of the battery module 14, the user would be able to exchange or recharge the battery module 14 with more power before the battery module 14 of the Bluetooth car controller 10 runs out of power. In other words, the low-power notification message serves as a warning message for the user to change or recharge the battery module 14 of the Bluetooth car controller 10.

Furthermore, the Bluetooth car controller 10 is capable of automatically unlocking the car door. However, when the Bluetooth car controller 10 is running low on power, the Bluetooth car controller 10 stops automatically unlocking the car door, so as to preserve some power in the battery module 14 of the Bluetooth car controller 10 while also reminding the user that the Bluetooth car controller 10 is running low on power. This power management function of the Bluetooth car controller 10 provides a notification to the user about the low-power situation of the Bluetooth car controller 10 before the Bluetooth car controller 10 completely runs out of power, thus preventing the Bluetooth car controller 10 from completely running out of power and ceasing to function. In other words, the present invention helps preventing an inconvenient situation from happening to the user who intends to use the Bluetooth car controller 10 to lock/unlock the car, and the inconvenient situation being the Bluetooth car controller 10 completely runs out of battery power.

In the present embodiment, the first voltage threshold V_{TH1} is greater than the second voltage threshold V_{TH2}, or simply, V_{TH1}>V_{TH2}.

As previously mentioned, when the Bluetooth car controller 10 is connected to the external device 20, and the battery voltage is less than the first voltage threshold V_{TH1} but greater than the second voltage threshold V_{TH2}, the processor module 11 generates the automatic unlocking signal and sends the automatic unlocking signal to the door lock controller module 13, thus allowing the door lock controller module 13 to unlock the car. The processor module 11 also generates the low-power notification message and sends the low-power notification message to the external device 20, to remind the user about the low-power situation of the battery module 14. Furthermore, when the Bluetooth car controller 10 is connected to the external device 20, and the battery voltage is less than the second voltage threshold V_{TH2}, the processor module 11 generates and sends the low-power notification message to the external device 20, but without generating the automatic unlocking signal.

For example, when the processor module 11 determines whether the Bluetooth transceiver module 12 is connected to the external device 20 through the Bluetooth transceiver module 12, the processor module 11 is determining whether the Bluetooth car controller 10 successfully establishes a Bluetooth communication connection with the external device 20. More particularly, when the Bluetooth communication connection is successfully established between the Bluetooth car controller 10 and the external device 20, the Bluetooth transceiver module 12 of the Bluetooth car controller 10 would output a connection successful signal. When the processor module 11 receives the connection successful signal from the Bluetooth transceiver module 12, the processor module 11 thus determines that the Bluetooth car controller 10 successfully establishes the Bluetooth communication connection with the external device 20.

For example, the external device 20 and the Bluetooth car controller 10 may first try to pair with each other. Once the external device 20 and the Bluetooth car controller 10 are already paired, the user may use the external device 20, thus allowing an application of the external device 20 to send out a connection request to the Bluetooth car controller 10, or alternatively, the user may control the Bluetooth car controller 10, thus allowing the Bluetooth car controller 10 to send out a connection request to the external device 20.

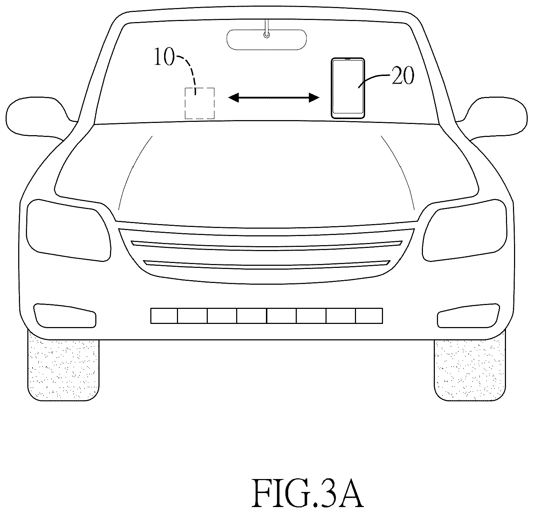

With reference to Fig. 3A, when a distance between the external device 20 and the Bluetooth car controller 10 is less than a default distance, a wireless communication between the external device 20 and the Bluetooth car controller 10 is established. For example, when the user carries the external device 20 into the car, then as both the external device 20 and the Bluetooth car controller 10 are in the car and in close proximity to each other, the wireless communication between the external device 20 and the Bluetooth car controller 10 is established.

In another embodiment, the Bluetooth car controller 10 or the external device 20 may be continuously and automatically sending out the connection request. When the distance between the external device 20 and the Bluetooth car controller 10 is less than the default distance, the wireless communication between the external device 20 and the Bluetooth car controller 10 is established. For example, the wireless communication is a Bluetooth wireless communication that is established between the external device 20 and the Bluetooth transceiver module 12 of the Bluetooth car controller 10.

Furthermore, when the Bluetooth car controller 10 is connected with the external device 20, and when the battery voltage is greater than the first voltage threshold V_{TH1}, the processor module 11 generates the automatic unlocking signal, sends the automatic unlocking signal to the door lock controller module 13 for allowing the door lock controller module 13 to output the unlocking signal to unlock the car, but omits generating the low-power notification message (S206).

In this embodiment, the external device 20 is the user's smart phone with an application (APP) installed, and the external device 20 may verify its pairing with the Bluetooth car controller 10 through executing the application. Once verified, the application thus allows the external device 20 and the Bluetooth car controller 10 to establish the wireless connection, hence allowing the external device 20 to be wirelessly communicating with the Bluetooth car controller 10 through the Bluetooth transceiver module 12.

Since Bluetooth wireless connection has a fairly limited connection range, when the Bluetooth wireless connection is successfully established, the Bluetooth car controller 10 and the external device 20 must be within proximity from each other. In other words, when the Bluetooth wireless connection is successfully established between the Bluetooth car controller 10 and the external device 20, the user carrying the external device 20 must be within proximity from the Bluetooth car controller 10 that is in the car. Therefore, when the user carrying the external device 20 is close enough to the car, the Bluetooth car controller 10 may automatically generate the automatic unlocking signal, thus allowing the door lock controller module 13 to output the unlocking signal to unlock the car. As a result, when the user approaches the car with the external device 20, the user does not need to manually unlock the car, as the car would automatically be unlocked for the user.

When the battery voltage is greater than the first voltage threshold V_{TH1}, a remaining battery charge of the battery module 14 is still plentiful, and so the processor module 11 finds no need to generate the low-power notification message for notifying the user.

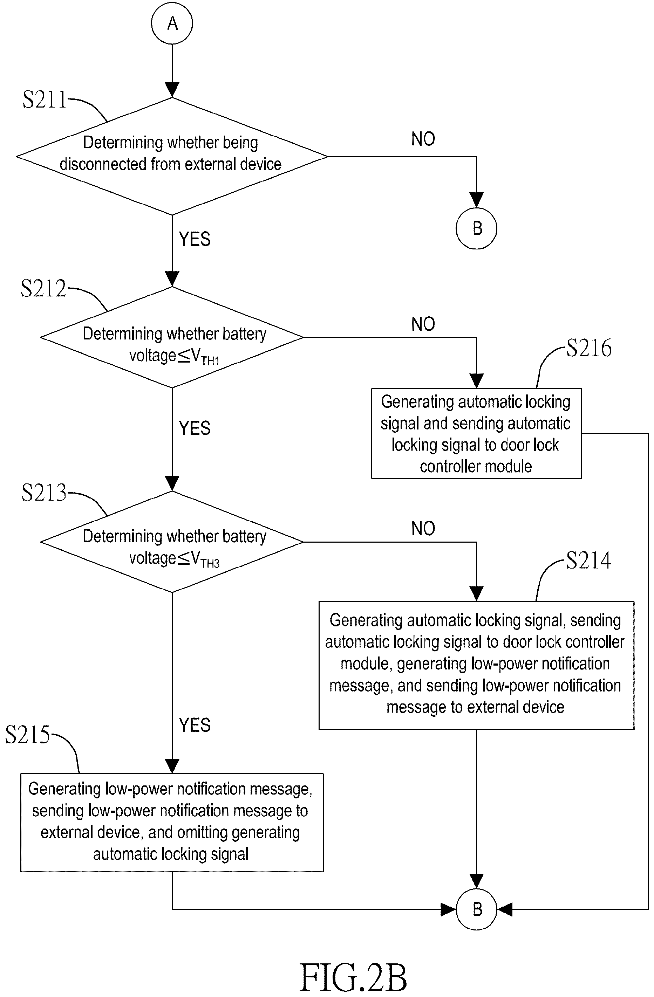

With further reference to Fig. 2B, when the Bluetooth car controller 10 is connecting unsuccessfully with the external device 20, the processor module 11 determines whether the Bluetooth transceiver module 12 is disconnected from the external device 20 (S211). When the Bluetooth transceiver module 12 is disconnected from the external device 20, the processor module 11 determines whether the battery voltage is less than or equal to the first voltage threshold V_{TH1} (S212). When the Bluetooth transceiver module 12 is disconnected from the external device 20, and the processor module 11 determines the battery voltage is less than or equal to the first voltage threshold V_{TH1}, the processor module 11 determines whether the battery voltage is less than or equal to a third voltage threshold V_{TH3} (S213). When the Bluetooth transceiver module 12 is disconnected from the external device 20, and the processor module 11 determines the battery voltage is greater than the third voltage threshold V_{TH3}, the processor module 11 generates an automatic locking signal, sends the automatic locking signal to the door lock controller module 13 for allowing the door lock controller module 13 to output the locking signal to lock the car, generates the low-power notification message, and sends the low-power notification message to the external device 20 through the Bluetooth transceiver module 12 (S214). When the Bluetooth transceiver module 12 is disconnected from the external device 20, and the processor module 11 determines the battery voltage is less than or equal to the third voltage threshold V_{TH3}, the processor module 11 generates the low-power notification message, sends the low-power notification message to the external device 20 through the Bluetooth transceiver module 12, and omits generating the automatic locking signal (S215).

When the Bluetooth car controller 10 is disconnected from the external device 20, and the battery voltage is less than the first voltage threshold V_{TH1} or the third voltage threshold V_{TH3}, the Bluetooth car controller 10 is able to automatically send the low-power notification message to the external device 20, thus allowing the user using the external device 20 to read the low-power notification message. As the user is notified about a low-power situation of the battery module 14, the user would be able to exchange or recharge the battery module 14 with more power before the battery module 14 of the Bluetooth car controller 10 runs out of power.

Furthermore, the Bluetooth car controller 10 is capable of automatically locking the car door. However, when the battery voltage of the Bluetooth car controller 10 is less than the third voltage threshold V_{TH3}, the Bluetooth car controller 10 stops automatically locking the car door, so as to preserve some power in the battery module 14 of the Bluetooth car controller 10 while also reminding the user that the Bluetooth car controller 10 is running low on power. This mechanism prevents the user from being automatically locked out of the car when the Bluetooth car controller 10 is low on battery charge.

In the present embodiment, the first voltage threshold V_{TH1} is greater than the third voltage threshold V_{TH3}, or simply, V_{TH1}>V_{TH3}. Moreover, the second voltage threshold V_{TH2} is also greater than the third voltage threshold V_{TH3}, or simply, V_{TH2}>V_{TH3}. As a result, V_{TH1}>V_{TH2}>V_{TH3}. This means that when the battery voltage is less than the third voltage threshold V_{TH3}, the Bluetooth car controller 10 would have been managing power by omitting sending the automatic unlocking signal to unlock the car; hence, preventing the user from being automatically locked out of the car by omitting sending the automatic locking signal to lock the car is a helpful feature of the Bluetooth car controller 10.

As previously mentioned, when the Bluetooth car controller 10 is disconnected from the external device 20, and the battery voltage is less than the first voltage threshold V_{TH1} but greater than the third voltage threshold V_{TH3}, the processor module 11 generates the automatic locking signal and sends the automatic locking signal to the door lock controller module 13, thus allowing the door lock controller module 13 to lock the car. The processor module 11 also generates the low-power notification message and sends the low-power notification message to the external device 20, to remind the user about the low-power situation of the battery module 14. Furthermore, when the Bluetooth car controller 10 is disconnected from the external device 20, and the battery voltage is less than the third voltage threshold V_{TH3}, the processor module 11 generates and sends the low-power notification message to the external device 20, but without generating the automatic locking signal.

For example, when the processor module 11 determines whether the Bluetooth transceiver module 12 is disconnected from the external device 20 through the Bluetooth transceiver module 12, the processor module 11 is determining whether the Bluetooth car controller 10 has disconnected the Bluetooth communication connection that was successfully established with the external device 20. More particularly, when the Bluetooth car controller 10 disconnects the Bluetooth communication connection from the external device 20, the Bluetooth transceiver module 12 of the Bluetooth car controller 10 would output a disconnection signal. When the processor module 11 receives the disconnection signal from the Bluetooth transceiver module 12, the processor module 11 thus determines that the Bluetooth car controller 10 is disconnected from the external device 20.

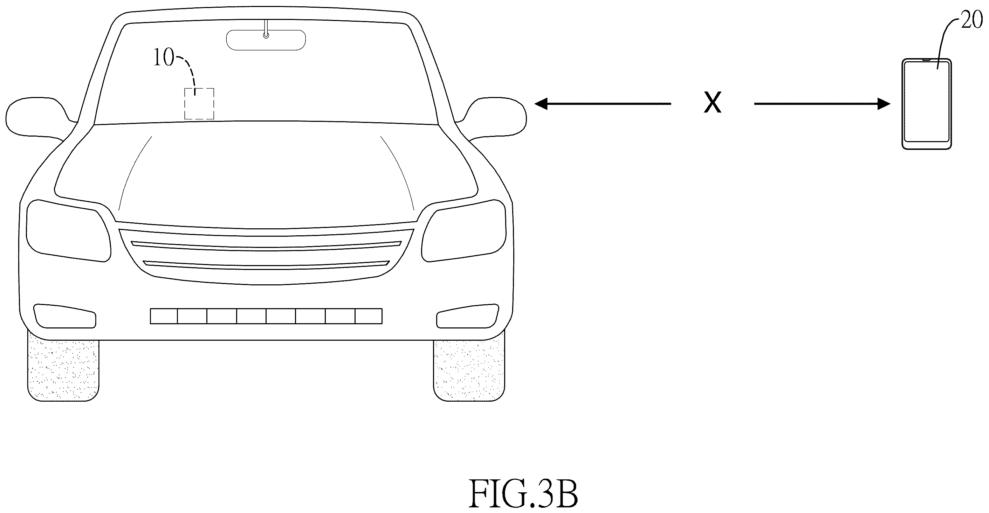

With reference to Fig. 3B, when the user carries the external device 20 and leaves the car, a connection signal strength between the external device 20 and the Bluetooth car controller 10 would decrease until the external device 20 and the Bluetooth car controller 10 cannot maintain the wireless connection. When the external device 20 and the Bluetooth car controller 10 fail to maintain the wireless connection, the Bluetooth transceiver module 12 of the Bluetooth car controller 10 would generate the disconnection signal.

Furthermore, when the Bluetooth car controller 10 is disconnected from the external device 20, and the battery voltage is less than the first voltage threshold V_{TH1}, the processor module 11 automatically generates the automatic locking signal, sends the automatic locking signal to the door lock controller module 13 for allowing the door lock controller module 13 to output the locking signal to lock the car, and omits generating the low-power notification message (S216).

As previously mentioned, when the battery voltage is greater than the first voltage threshold V_{TH1}, a remaining battery charge of the battery module 14 is still plentiful, so the processor module 11 finds no need to generate the low-power notification message for notifying the user.

With reference to Fig. 1, the Bluetooth car controller 10 additionally includes a sound notification module 15, and the sound notification module 15 is connected to the processor module 11. When the Bluetooth transceiver module 12 of the Bluetooth car controller 10 is connected to the external device 20, and the processor module 11 generates the low-power notification message, the processor module 11 further generates a sound notification signal and sends the sound notification signal to the sound notification module 15, thus allowing the sound notification module 15 to generate a notification sound according to the sound notification signal.

For example, with references to steps S204 and S205, when the Bluetooth transceiver module 12 is connected to the external device 20, the Bluetooth car controller 10 and the external device 20 of the user must be within proximity from each other. As such, apart from generating the low-power notification message to notify the user, the Bluetooth car controller 10 further utilizes the sound notification module 15 to produce the notification sound for alerting the user about the low-power situation of the battery module 14.

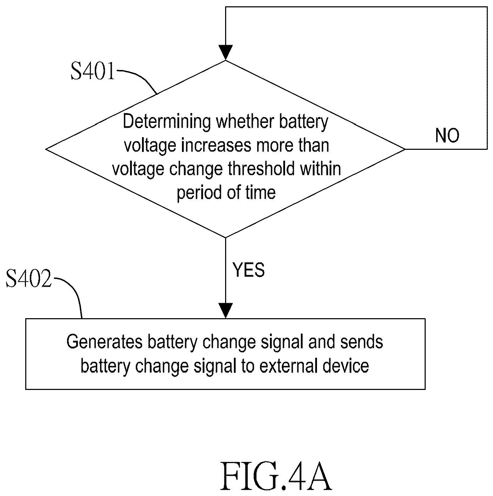

With reference to Fig. 4A, the processor module 11 further determines whether the battery voltage increases more than a voltage change threshold within a period of time (S401). When the battery voltage increases more than the voltage change threshold within the period of time, the processor module 11 generates a battery change signal and sends the battery change signal to the external device 20 through the Bluetooth transceiver module 12 (S402). In the present embodiment, the battery change signal includes a battery voltage information.

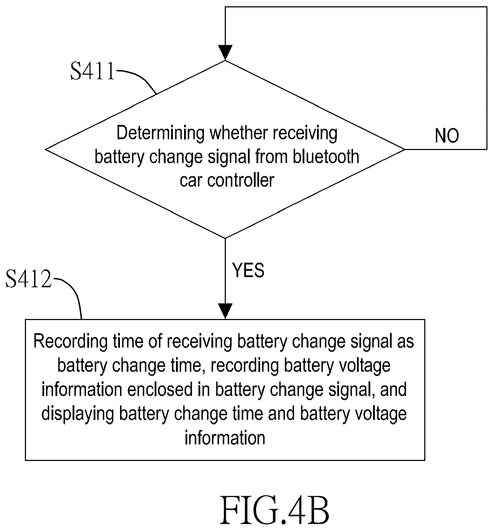

With reference to Fig. 4B, the external device 20 determines whether receiving the battery change signal from the Bluetooth car controller 10 (S411). When the external device 20 receives the battery change signal from the Bluetooth car controller 10, the external device 20 records a time of receiving the battery change signal as a battery change time, records the battery voltage information enclosed in the battery change signal, and displays the battery change time and the battery voltage information (S412).

As a result, the user is able to search and obtain the battery change time whenever the user uses the external device 20, thus allowing the user to conveniently understand how long the battery module 14 has been in use. This technical feature provides additional information that may assist the user in deciding whether to change the battery module 14 of the Bluetooth car controller 10.

With reference to Fig. 1, the Bluetooth car controller 10 further includes a switch module 16, and the battery module 14 further includes a battery unit 141 and a voltage detection unit 142.

The battery unit 141 is connected to the Bluetooth transceiver module 12 and the processor module 11, and the battery unit 141 supplies electricity to the Bluetooth transceiver module 12 and the processor module 11. The battery unit 141 is also connected to the door lock controller module 13 through the switch module 16. The battery unit 141, the switch module 16, and the door lock controller module 13 together form a power supply circuit.

The voltage detection unit 142 is connected to the battery unit 141 and the processor module 11. The voltage detection unit 142 detects the battery voltage from the battery unit 141 and sends the battery voltage to the processor module 11.

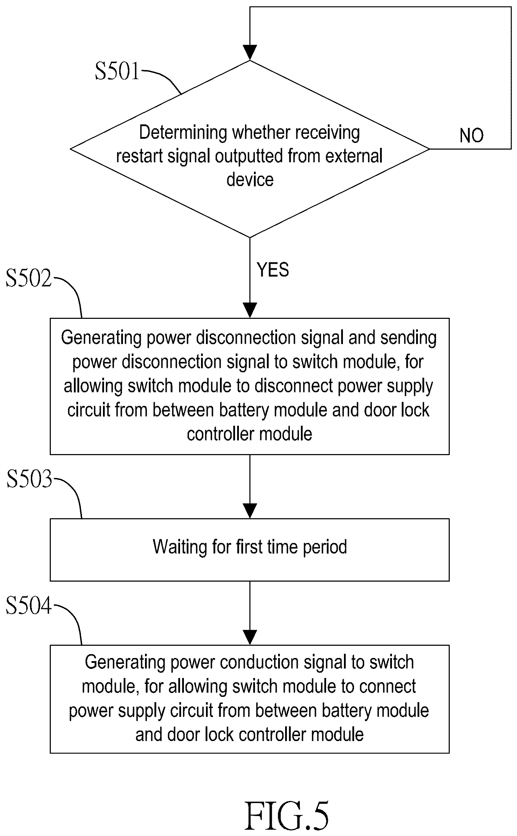

With further reference to Fig. 5, the processor module 11 further determines whether receiving a restart signal outputted from the external device 20 through the Bluetooth transceiver module 12 (S501). When the processor module 11 receives the restart signal, the processor module 11 generates a power disconnection signal and sends the power disconnection signal to the switch module 16, for allowing the switch module 16 to disconnect the power supply circuit from between the battery module 14 and the door lock controller module 13 (S502). The processor module 11 then waits for a first time period (S503). After waiting for the first time period, the processor module 11 generates a power conduction signal and sends the power conduction signal to the switch module 16, for allowing the switch module 16 to connect the power supply circuit from between the battery module 14 and the door lock controller module 13 (S504).

For example, the door lock controller module 13 can be a car door controller of the car that is configured to remotely lock/unlock the car door of the car. In rare cases, the car door controller might freeze or function abnormally when in use, and in this instance wherein the car door controller is unable to lock/unlock the car door normally, the user needs to manually reload the car door controller's battery, so as to restart the car door controller and reset its settings for solving the freezing problem or the abnormally functioning problem.

For the present invention, the user only needs to control the external device 20 for allowing the external device 20 to generate the restart signal. For example, the application of the external device 20 is able to output the restart signal to the Bluetooth car controller 10. When the Bluetooth car controller 10 receives the restart signal, the processor module 11 of the Bluetooth car controller 10 would control the switch module 16 to disconnect the power supply circuit from between the battery module 14 and the door lock controller module 13, then after waiting for the first time period, such as waiting for one to two seconds, the processor module 11 would control the switch module 16 to reconnect the power supply circuit from between the battery module 14 and the door lock controller module 13, thus restarting the door lock controller module 13 for allowing the door lock controller module 13 to reset to its default settings and to function normally.

With references to Fig. 2A and Fig. 2B, flow charts of a power management method of the present invention are shown. The power management method of the present invention is executed by the processor module 11 of the Bluetooth car controller 10 with the power management function. The power management method includes the following steps:
S201: determining whether being in connection with an external device 20;
S202: when in connection with the external device 20, determining whether the battery voltage of the battery module 14 is less than or equal to the first voltage threshold V_{TH1};
S203: when in connection with the external device 20, and when the battery voltage is less than or equal to the first voltage threshold V_{TH1}, determining whether the battery voltage is less than or equal to the second voltage threshold V_{TH2};
S204: when in connection with the external device 20, and when the battery voltage is greater than the second voltage threshold V_{TH2}, generating an automatic unlocking signal, sending the automatic unlocking signal to the door lock controller module 13, generating the low-power notification message, sending the low-power notification message to the external device 20, generating the sound notification signal, and sending the sound notification signal to the sound notification module 15;
S205: when in connection with the external device 20, and when the battery voltage is less than or equal to the second voltage threshold V_{TH2}, generating the low-power notification message, sending the low-power notification message to the external device 20, and omitting generating the automatic unlocking signal;
S206: when in connection with the external device 20, and when the battery voltage is greater than the first voltage threshold V_{TH1}, generating the automatic unlocking signal and sending the automatic unlocking signal to the door lock controller module 13;
S211: when unsuccessfully connecting to the external device 20, determining whether being disconnected from the external device 20;
S212: when being disconnected from the external device 20, determining whether the battery voltage is less than or equal to the first voltage threshold V_{TH1};
S213: when being disconnected from the external device 20, and when the battery voltage is less than or equal to the first voltage threshold V_{TH1}, determining whether the battery voltage is less than or equal to the third voltage threshold V_{TH3};
S214: when being disconnected from the external device 20, and when the battery voltage is greater than the third voltage threshold V_{TH3}, generating the automatic locking signal, sending the automatic locking signal to the door lock controller module 13, generating the low-power notification message, and sending the low-power notification message to the external device 20;
S215: when being disconnected from the external device 20, and when the battery voltage is less than or equal to the third voltage threshold V_{TH3}, generating the low-power notification message, sending the low-power notification message to the external device 20, and omitting generating the automatic locking signal;
S216: when being disconnected from the external device 20, and when the battery voltage is greater than the first voltage threshold V_{TH1}, generating the automatic locking signal and sending the automatic locking signal to the door lock controller module 13.

With further reference to Fig. 4A, the power management method additionally includes the following steps:
S401: determining whether the battery voltage increases more than a voltage change threshold within a period of time;
S402: when the battery voltage increases more than the voltage change threshold within the period of time, generating a battery change signal and sending the battery change signal to the external device 20.

With reference to Fig. 4B, the external device 20 executes the following steps:
S411: determining whether receiving the battery change signal from the Bluetooth car controller 10;
S412: when receiving the battery change signal from the Bluetooth car controller 10, recording a time of receiving the battery change signal as a battery change time, recording the battery voltage information enclosed in the battery change signal, and displaying the battery change time and the battery voltage information.

With further reference to Fig. 5, the power management method further includes the following steps:
S501: determining whether receiving the restart signal outputted from the external device 20;
S502: when receiving the restart signal, generating the power disconnection signal and sending the power disconnection signal to the switch module 16, for allowing the switch module 16 to disconnect the power supply circuit from between the battery module 14 and the door lock controller module 13;
S503: waiting for a first time period;
S504: generating the power conduction signal to the switch module 16, for allowing the switch module 16 to connect the power supply circuit from between the battery module 14 and the door lock controller module 13.

## Claims

1. A Bluetooth car controller (10) with a power management function, **characterized in that** the Bluetooth car controller (10) is configured to mount in a car, and the Bluetooth car controller (10) comprises:
a processor module (11);
a Bluetooth transceiver module (12), connected to the processor module (11), and configured to connect to an external device (20);
a door lock controller module (13), connected to the processor module (11), configured to output a locking signal to lock a car door of the car or to output an unlocking signal to unlock the car door of the car; and
a battery module (14), connected to the processor module (11); wherein the processor module (11) monitors a battery voltage of the battery module (14);
wherein the processor module (11) determines whether the Bluetooth transceiver module (12) is connected to the external device (20);
wherein when the Bluetooth transceiver module (12) is connected to the external device (20), the processor module (11) determines whether the battery voltage is less than or equal to a first voltage threshold;
wherein when the Bluetooth transceiver module (12) is connected to the external device (20), and the battery voltage is less than or equal to the first voltage threshold, the processor module (11) determines whether the battery voltage is further less than or equal to a second voltage threshold;
wherein when the Bluetooth transceiver module (12) is connected to the external device (20), and the battery voltage is greater than the second voltage threshold, the processor module (11) generates an automatic unlocking signal, and the processor module (11) sends the automatic unlocking signal to the door lock controller module (13), thus allowing the door lock controller module (13) to output the unlocking signal; the processor module (11) also generates a low-power notification message, and the processor module (11) sends the low-power notification message to the external device (20) through the Bluetooth transceiver module (12);
wherein when the Bluetooth transceiver module (12) is connected to the external device (20), and the battery voltage is less than or equal to the second voltage threshold, the processor module (11) generates the low-power notification message and sends the low-power notification message to the external device (20) through the Bluetooth transceiver module (12), and the processor module (11) omits generating the automatic unlocking signal.

2. The Bluetooth car controller (10) as claimed in claim 1, wherein when the Bluetooth car controller (10) is connecting unsuccessfully with the external device (20), the processor module (11) determines whether the Bluetooth transceiver module (12) is disconnected from the external device (20);
wherein when the Bluetooth transceiver module (12) is disconnected from the external device (20), the processor module (11) determines whether the battery voltage is less than or equal to the first voltage threshold;
wherein when the Bluetooth transceiver module (12) is disconnected from the external device (20), and the battery voltage is less than or equal to the first voltage threshold, the processor module (11) determines whether the battery voltage is less than or equal to a third voltage threshold;
wherein when the Bluetooth transceiver module (12) is disconnected from the external device (20), and the battery voltage is greater than the third voltage threshold, the processor module (11) generates an automatic locking signal, sends the automatic locking signal to the door lock controller module (13) for allowing the door lock controller module (13) to output the locking signal to lock the car, generates the low-power notification message, and sends the low-power notification message to the external device (20) through the Bluetooth transceiver module (12);
wherein when the Bluetooth transceiver module (12) is disconnected from the external device (20), and the battery voltage is less than or equal to the third voltage threshold, the processor module (11) generates the low-power notification message, sends the low-power notification message to the external device (20) through the Bluetooth transceiver module (12), and omits generating the automatic locking signal.

3. The Bluetooth car controller (10) as claimed in claim 1, further comprising:
a sound notification module (15), connected to the processor module (11);
wherein when the Bluetooth transceiver module (12) is connected to the external device (20), and the processor module (11) generates the low-power notification message, the processor module (11) further generates a sound notification signal and sends the sound notification signal to the sound notification module (15), thus allowing the sound notification module (15) to generate a notification sound according to the sound notification signal.

4. The Bluetooth car controller (10) as claimed in claim 1, wherein the processor module (11) further determines whether the battery voltage increases more than a voltage change threshold within a period of time;
wherein when the battery voltage increases more than the voltage change threshold within the period of time, the processor module (11) generates a battery change signal and sends the battery change signal to the external device (20) through the Bluetooth transceiver module (12).

5. The Bluetooth car controller (10) as claimed in claim 4, wherein the battery change signal comprises a battery voltage information;
wherein when the external device (20) receives the battery change signal, the external device (20) records a time of receiving the battery change signal as a battery change time, records the battery voltage information enclosed in the battery change signal, and displays the battery change time and the battery voltage information.

6. The Bluetooth car controller (10) as claimed in any one of claims 1 to 5, further comprising:
a switch module (16);
wherein the battery module (14) comprises:
a battery unit (141), connected to the Bluetooth transceiver module (12) and the processor module (11), supplying electricity to the Bluetooth transceiver module (12) and the processor module (11), connected to the door lock controller module (13) through the switch module (16), and forming a power supply circuit together with the switch module (16) and the door lock controller module (13);
a voltage detection unit (142), connected to the battery unit (141) and the processor unit, detecting the battery voltage from the battery unit (141), and sending the battery voltage to the processor module (11);
wherein the processor module (11) further determines whether receiving a restart signal outputted from the external device (20) through the Bluetooth transceiver module (12);
wherein when receiving the restart signal, the processor module (11) generates a power disconnection signal, sends the power disconnection signal to the switch module (16) for allowing the switch module (16) to disconnect the power supply circuit from between the battery module (14) and the door lock controller module (13), waits for a first time period, generates a power conduction signal, and sends the power conduction signal to the switch module (16) for allowing the switch module (16) to connect the power supply circuit from between the battery module (14) and the door lock controller module (13).

7. A power management method, executed by a processor module (11) of a Bluetooth car controller (10) with a power management function, and comprising the following steps:
determining whether being in connection with an external device (20);
when in connection with the external device (20), determining whether a battery voltage is less than or equal to a first voltage threshold;
when in connection with the external device (20), and when the battery voltage is less than or equal to the first voltage threshold, determining whether the battery voltage is less than or equal to a second voltage threshold;
when in connection with the external device (20), and when the battery voltage is greater than the second voltage threshold, generating an automatic unlocking signal, generating a low-power notification message, and sending the low-power notification message to the external device (20); and
when in connection with the external device (20), and the battery voltage is less than or equal to the second voltage threshold, generating a low-power notification message, sending the low-power notification message to the external device (20), and omitting generating the automatic unlocking signal.

8. The power management method as claimed in claim 7, further comprising the following steps:
when unsuccessfully connecting to the external device (20), determining whether being disconnected from the external device (20);
when being disconnected from the external device (20), determining whether the battery voltage is less than or equal to the first voltage threshold;
when being disconnected from the external device (20), and when the battery voltage is less than or equal to the first voltage threshold, determining whether the battery voltage is less than or equal to a third voltage threshold;
when being disconnected from the external device (20), and when the battery voltage is greater than the third voltage threshold, generating the automatic locking signal, generating the low-power notification message, and sending the low-power notification message to the external device (20); and
when being disconnected from the external device (20), and when the battery voltage is less than or equal to the third voltage threshold, generating the low-power notification message, sending the low-power notification message to the external device (20), and omitting generating the automatic locking signal.

9. The power management method as claimed in claim 7, further comprising the following step:
when connected to the external device (20), and generating the low-power notification message, further generating a sound notification signal.

10. The power management method as claimed in claim 7, further comprising the following steps:
determining whether the battery voltage increases more than a voltage change threshold within a period of time; and
when the battery voltage increases more than the voltage change threshold within the period of time, generating a battery change signal and sending the battery change signal to the external device (20).

11. The power management method as claimed in any one of claims 7 to 10, further comprising the following steps:
determining whether receiving a restart signal outputted from the external device (20); and
when receiving the restart signal, generating a power disconnection signal, waiting for a first time period, and generating a power conduction signal.
